# EUROPEAN PATENT APPLICATION

(11) **EP 4 510 247 A1**
(43) Date of publication of application: **19.02.2025**
(21) Application number: 23916633.3
(22) Date of filing: 16.01.2023
(51) Int. Cl.: H01M 4/86, H01M 4/88

(54) **NEGATIVE ELECTRODE SHEET AND PREPARATION METHOD THEREFOR, SECONDARY BATTERY AND ELECTRIC DEVICE**

(71) Applicant: Contemporary Amperex Technology (Hong Kong) Limited, Hong Kong (HK)
(72) Inventor: ZHANG, Wenyan, Ningde, Fujian 352100 (CN); GUAN, Wenhao, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2023/072271
(87) International publication number: WO 2024/152140

(57) **Abstract**

This application provides a negative electrode plate including a three-dimensional porous current collector and an insulation layer attached to a side of the three-dimensional porous current collector, where the insulation layer extends from a surface to an interior of the three-dimensional porous current collector, and a thickness of the insulation layer is less than a thickness of the three-dimensional porous current collector; and this application relates to a preparation method of the corresponding negative electrode plate, a secondary battery, and an electric apparatus. The negative electrode plate can effectively prevent the growth of lithium dendrites on a surface of the negative electrode plate and inhibit the volume swelling of the electrode, thereby improving the cycling performance and safety performance of the battery.

## Description

### TECHNICAL FIELD

This application relates to the field of secondary battery technologies, and in particular, to a negative electrode plate and a preparation method thereof, a secondary battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

Along with the great development of secondary batteries, higher requirements are imposed on their cycling performance and safety performance. Lithium metal secondary batteries have great market competitiveness in the era of carbon neutrality because of their high energy density and low carbon emission. However, there are still many problems to be solved in the current research of lithium metal batteries. One important problem is that: during charging and discharging of lithium metal batteries, lithium ions gain electrons and deposit on a surface of the negative electrode plate, forming lithium dendrites and dead lithium, which cause volume swelling of the electrode. With the increase of cycles, lithium dendrites may pierce the separator, resulting in internal short circuit, thermal failure, or explosion of the battery, thereby posing safety problems.

Therefore, one of major concerns of persons skilled in the art is to find a solution that can further improve the cycling performance and safety of secondary batteries.

### SUMMARY

In view of the foregoing subject, this application is intended to provide a negative electrode plate, which can effectively inhibit the volume swelling of the electrode, thereby improving the cycling performance and safety performance of batteries.

To achieve the foregoing objective, a first aspect of this application provides a negative electrode plate including a three-dimensional porous current collector and an insulation layer attached to a side of the three-dimensional porous current collector, where the insulation layer extends from a surface to an interior of the three-dimensional porous current collector through a porous structure, and a thickness of the insulation layer is less than a thickness of the three-dimensional porous current collector.

In the negative electrode plate of this application, the three-dimensional porous current collector is adopted and the insulation layer is attached to the three-dimensional porous current collector, so that the insulation layer extends from the surface to the interior of the three-dimensional porous current collector by a certain thickness. When the negative electrode plate is assembled into a battery, the side, with the insulation layer, of the negative electrode plate is arranged to face the separator. In this way, electron passages on the surface of the three-dimensional porous current collector can be effectively obstructed, and an electron concentration is reduced on the surface of the current collector, so that lithium ions cannot gain electrons to deposit on the surface of the three-dimensional porous current collector during deposition but are forced to deposit in pores inside the three-dimensional porous current collector instead. This can effectively inhibit the growth of lithium dendrites on the surface of the negative electrode plate and prevent safety problems caused by internal short circuit, thermal failure, or explosion of the battery due to lithium dendrites piercing the separator, thereby improving the safety and cycling performance of the battery.

In addition, the insulation layer in the negative electrode plate of this application extends from the surface to the interior of the three-dimensional porous current collector. This can reduce the volume of the negative electrode plate compared with the method in which the insulation layer is provided on the surface of the current collector and extends outwards.

In any embodiment, the thickness of the insulation layer is 5-20 µm, and the thickness of the three-dimensional porous current collector is 50-500 µm. This can further inhibit the growth of lithium dendrites on the surface of the negative electrode plate, further improving the safety and cycling performance of the battery.

In any embodiment, the insulation layer has a through hole. In this way, when the insulation layer is made of a material that cannot conduct ions, lithium ions can pass through the insulation layer through the through hole and reach pores inside the three-dimensional porous current collector.

In any embodiment, the insulation layer includes a polymer attached to a mesh wire of the three-dimensional porous current collector. In other words, the polymer material for the insulation layer is attached to the mesh wire of three-dimensional porous current collector to form the insulation layer.

In any embodiment, a thickness of the polymer attached to the mesh wire is less than 10 µm.

In any embodiment, the polymer includes one or more of a polymer not conducting electrons or ions and a polymer conducting ions but not conducting electrons. Use of these polymers can greatly inhibit the growth of lithium dendrites on the surface of the negative electrode plate, improving the safety and cycling performance of the battery.

In any embodiment, the polymer not conducting electrons or ions includes one or more of polypropylene, polytetrafluoroethylene, and fluorinated ethylene propylene.

In any embodiment, the polymer conducting ions but not conducting electrons includes one or more of polyvinylidene fluoride, polyacrylonitrile, polyethylene oxide, polydiallyldimethylammonium chloride, and polyethyleneimine.

In any embodiment, the three-dimensional porous current collector includes one or more of three-dimensional porous current collectors made of stainless steel, molybdenum, titanium, nickel, copper, and carbon material.

In any embodiment, a pore diameter of the three-dimensional porous current collector is 50-600 µm.

In any embodiment, a porosity of the three-dimensional porous current collector is 50%-90%.

A second aspect of this application provides a preparation method of the negative electrode plate according to the first aspect of this application. The method includes the following steps:
providing a three-dimensional porous current collector;
attaching an insulation slurry to a side surface of the three-dimensional porous current collector and making the insulation slurry to permeate inside the three-dimensional porous current collector; where a permeating depth of the insulation slurry is less than a thickness of the three-dimensional porous current collector; and
drying the insulation slurry to form an insulation layer.

The insulation slurry is attached to the surface of the three-dimensional porous current collector and made to permeate inside the three-dimensional porous current collector. When the insulation slurry is dried, an insulation layer can be formed on the three-dimensional porous current collector. This preparation method is simple to implement and suitable for industrial mass production.

In any embodiment, the insulation slurry includes a solvent and one or more of a polymer not conducting electrons or ions and a polymer conducting ions but not conducting electrons.

In any embodiment, the polymer not conducting electrons or ions includes one or more of polypropylene, polytetrafluoroethylene, and fluorinated ethylene propylene.

In any embodiment, the polymer conducting ions but not conducting electrons includes one or more of polyvinylidene fluoride, polyacrylonitrile, polyethylene oxide, polydiallyldimethylammonium chloride, and polyethyleneimine.

In any embodiment, the solvent includes one or more of N-methylpyrrolidone, tetrahydrofuran, dimethyl sulfoxide, toluene, ethylene carbonate, and propylene carbonate.

In any embodiment, a solid content of the insulation slurry is 1%-25%.

In any embodiment, the solid content of the insulation slurry is 9%-15%.

A third aspect of this application further provides a secondary battery including a positive electrode plate, a separator, a negative electrode plate, and an electrolyte, where the separator is provided between the positive electrode plate and the negative electrode plate, the negative electrode plate is the negative electrode plate according to the first aspect of this application or a negative electrode plate prepared using the preparation method according to the second aspect of this application, and the separator is close to a side of the negative electrode plate provided with an insulation layer. In this way, the insulation layer on the negative electrode plate can inhibit lithium ions from depositing on the surface of the negative electrode plate to form lithium dendrites during charging and discharging, thereby effectively improving the safety and cycling performance of the battery.

A fourth aspect of this application further provides an electric apparatus including the secondary battery according to the third aspect of this application.

In the negative electrode plate of this application, an insulation layer is attached to a side of the three-dimensional porous current collector, and the insulation layer is made to extend from a surface to an interior of the three-dimensional porous current collector to the inside. Assembling the negative electrode plate into a secondary battery can effectively inhibit the growth of lithium dendrites on the surface of the negative electrode plate and prevent safety problems caused by internal short circuit, thermal failure, or explosion of the battery due to lithium dendrites piercing the separator, thereby improving the safety and cycling performance of the battery.

### BRIEF DESCRIPTION OF DRAWINGS

To better describe and explain the embodiments and/or examples of this application, one or more accompanying drawings may be used for reference. Additional details or examples used to describe the accompanying drawings should not be considered as limiting the scope of any one of the disclosed applications, embodiments and/or examples being described, and the best modes of these applications already understood.
FIG. 1 is a schematic diagram of arrangement of a positive electrode plate, a negative electrode plate, and a separator in a secondary battery according to an embodiment of this application;
FIG. 2 is a schematic diagram of a secondary battery according to an embodiment of this application;
FIG. 3 is an exploded view of the secondary battery according to the embodiment of this application in FIG. 2; and
FIG. 4 is a schematic diagram of an electric apparatus using a secondary battery as a power source according to an embodiment of this application.

Reference signs:
1: negative electrode plate; 11: three-dimensional porous current collector; 12: insulation layer; 2: separator; 3: positive electrode current collector; 4: positive electrode active material layer; 5: secondary battery; 51: housing; 52: electrode assembly; 53: cover plate; and 6: electric apparatus.

### DESCRIPTION OF EMBODIMENTS

The following specifically discloses embodiments of a negative electrode plate and a preparation method thereof, a secondary battery, and an electric apparatus in this application, with proper reference to accompanying drawings. However, unnecessary detailed descriptions may be omitted. For example, a detailed description of a well-known matter or a repeated description of an actually identical structure may be omitted. This is to prevent an unnecessarily lengthy description below, for ease of understanding by persons skilled in the art. In addition, the accompanying drawings and the following descriptions are provided for persons skilled in the art to fully understand this application, instead of limiting the subject matter recorded in the claims.

"Ranges" disclosed in this application are defined by means of setting lower and upper limits. A given range is defined by selecting one lower limit and one upper limit, where the selected lower and upper limits define boundaries of a particular range. Ranges defined in this manner may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if 1 and 2 are listed as the minimum range values, and 3, 4, and 5 are listed as the maximum range values, the following ranges are all predictable: 1-3, 1-4, 1-5, 2-3, 2-4, and 2-5. In this application, unless otherwise stated, a value range of "a-b" is an abbreviated representation of any combination of real numbers between a and b, where both a and b are real numbers. For example, the numerical range "0-5" means that all real numbers between 0 and 5 are listed herein, and "0-5" is just an abbreviated representation of the combinations of these numerical values. In addition, when a parameter is expressed as an integer greater than or equal to 2, this is equivalent to that the parameter is, for example, an integer of 2, 3, 4, 5, 6, 7, 8, 9, 10, 11, 12, and the like.

Unless otherwise specified, all the embodiments and optional embodiments of this application can be combined with each other to form new technical solutions.

Unless otherwise specified, all the technical features and optional technical features in this application may be combined to form a new technical solution.

Unless otherwise specified, all the steps in this application may be performed sequentially or randomly, or preferably performed sequentially. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "comprise" and "include" mentioned in this application may be exclusive or inclusive. For example, "comprise" and "include" may comprise or include other components not listed, or may comprise or include only the listed components.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

The weights described in the specification of this application may be measured in µg, mg, g, kg, and other weight units well known in the chemical industry.

At present, along with the great development of secondary batteries, higher requirements are imposed on their safety performance and cycling performance. During charging and discharging of conventional lithium secondary batteries, lithium ions gain electrons and deposit on a surface of the negative electrode plate, forming lithium dendrites and dead lithium, which cause volume swelling of the electrode, affecting the cycling performance of the battery. With the increase of cycles, lithium dendrites may pierce the separator, resulting in internal short circuit, thermal failure, or explosion of the battery, thereby posing safety problems. Therefore, one of major concerns of persons skilled in the art is to find an electrode plate that can improve the safety performance and cycling performance of the battery. In this regard, the inventors have found a negative electrode plate through research, which can effectively inhibit the growth of lithium dendrites on the surface of the negative electrode plate, thereby improving the safety performance and cycling performance of the battery.

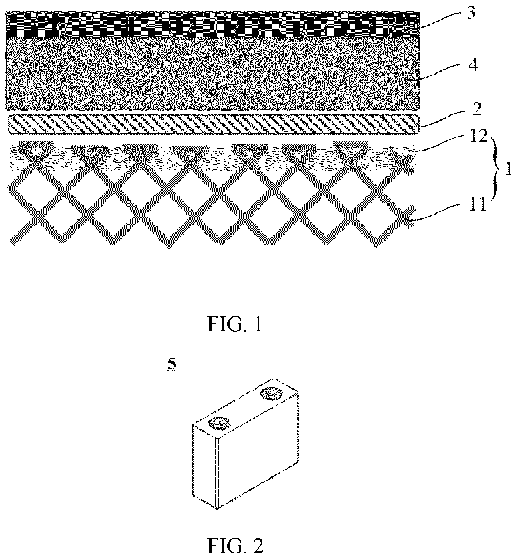

Referring to FIG. 1, in some embodiments, a first aspect of this application provides a negative electrode plate 1 including a three-dimensional porous current collector 11 and an insulation layer 12 attached to a side of the three-dimensional porous current collector 11, where the insulation layer 12 extends from a surface to an interior of the three-dimensional porous current collector 11 through a porous structure, and a thickness of the insulation layer 12 is less than a thickness of the three-dimensional porous current collector 11.

In the negative electrode plate 1 of this application, the three-dimensional porous current collector 11 is adopted and the insulation layer 12 is attached to a side of the three-dimensional porous current collector 11, so that the insulation layer 12 extends from the surface to the interior of the three-dimensional porous current collector 11 by a certain thickness. When the negative electrode plate 1 is assembled into a battery, the side, with the insulation layer 12, of the negative electrode plate 1 is arranged to face the separator 2. In this way, electron passages on the surface of the three-dimensional porous current collector 11 can be effectively obstructed, and an electron concentration is reduced on the surface of the current collector, so that lithium ions cannot gain electrons to deposit on the surface of the three-dimensional porous current collector 11 during deposition but are forced to deposit in pores inside the three-dimensional porous current collector 11 instead. This can effectively inhibit the growth of lithium dendrites on the surface of the negative electrode plate 1 and prevent safety problems caused by internal short circuit, thermal failure, or explosion of the battery due to lithium dendrites piercing the separator 2, thereby improving the safety and cycling performance of the battery. In addition, the insulation layer 12 in the negative electrode plate 1 of this application extends from the surface to the interior of the three-dimensional porous current collector 11. This can reduce the volume of the negative electrode plate 1 compared with the method in which the insulation layer 12 is provided on the surface of the current collector and extends outwards.

In some embodiments, a thickness of the insulation layer 12 is 5-20 µm, and a thickness of the three-dimensional porous current collector 11 is 50-500 µm. With the thickness of the insulation layer 12 set in a range of 5-20 µm and the thickness of the three-dimensional porous current collector 11 set in a range of 50-500 µm, the growth of lithium dendrites can be further inhibited on the surface of the negative electrode plate 1, further improving the safety and cycling performance of the battery.

It can be understood that the thickness of the insulation layer 12 may be but is not limited to 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm. The thickness of the three-dimensional porous current collector 11 may be but is not limited to 50 µm, 80 µm, 100 µm, 120 µm, 140 µm, 160 µm, 180 µm, 200 µm, 220 µm, 240 µm, 260 µm, 280 µm, 300 µm, 320 µm, 340 µm, 360 µm, 380 µm, 400 µm, 420 µm, 440 µm, 460 µm, 480 µm, or 500 µm.

In some embodiments, the insulation layer 12 has a through hole. In this way, when the insulation layer 12 is made of a material that cannot conduct ions, lithium ions can pass through the insulation layer 12 through the through hole and reach pores inside the three-dimensional porous current collector 11. It should be noted that when the insulation layer 12 is made of a material that can conduct ions, the insulation layer 12 may not need a through hole.

In some embodiments, the insulation layer 12 includes a polymer attached to a mesh wire of the three-dimensional porous current collector 11. In other words, the polymer material for the insulation layer 12 is attached to the mesh wire of the three-dimensional porous current collector 11 to form the insulation layer 12. It can be understood that the material for the insulation layer 12 may be applied on the mesh wire of the three-dimensional porous current collector 11 in a form of slurry and then dried to form the insulation layer 12.

In some embodiments, a thickness of the polymer attached to the mesh wire is less than 10 µm. That is, the thickness of the polymer on each mesh wire of the three-dimensional porous current collector 11 is less than 10 µm. It can be understood that the thickness of the polymer attached to the mesh wire may be but is not limited to 1 µm, 2 µm, 3 µm, 4 µm, 5 µm, 6 µm, 7 µm, 8 µm, or 9 µm. Mesh wires are filaments that are connected to each other to enclose pores in the three-dimensional porous current collector 11, and a plurality of mesh wires are interwoven to form the three-dimensional current collector with a porous structure.

In some embodiments, the polymer for the insulation layer 12 includes one or more of a polymer not conducting electrons or ions and a polymer conducting ions but not conducting electrons. The material of the insulation layer 12 may be a polymer material that can conduct ions or cannot conduct ions. When a polymer conducting ions but not conducting electrons is used, a polymer that has other functions such as promoting film formation of an electrolyte may also be used. The foregoing types of polymers all have excellent dielectric properties. They can effectively obstruct the electron passages on the surface of the three-dimensional porous current collector 11 and inhibit the deposition of lithium ions on the surface of the three-dimensional porous current collector 11, thereby inhibiting the growth of lithium dendrites on the surface of the negative electrode plate 1 and improving the safety and cycling performance of the battery.

It can be understood that the terms "insulation" and "not conducting electrons" used in this application do not mean being totally unable to conduct electrons but means an extremely low electron conductivity. For example, in some embodiments, the electron conductivity of the insulation layer 12 is lower than 10⁻¹⁰ S/cm.

In some embodiments, the polymer not conducting electrons or ions includes one or more of polypropylene, polytetrafluoroethylene, and fluorinated ethylene propylene. The insulation layer 12 made of the foregoing polymers can block electrons and lithium ions from passing through the insulation layer 12. It can be understood that the insulation layer 12 made of such material should have through holes, so that lithium ions can reach pores inside the three-dimensional porous current collector 11 through the insulation layer 12.

In some embodiments, the polymer conducting ions but not conducting electrons includes one or more of polyvinylidene fluoride, polyacrylonitrile, polyethylene oxide, polydiallyldimethylammonium chloride, and polyethyleneimine. The insulation layer 12 made of this polymer can block electrons but cannot block lithium ions from passing through the insulation layer 12. It can be understood that the insulation layer 12 made of such material may not have through holes, and lithium ions can reach pores inside the three-dimensional porous current collector 11 through the insulation layer 12. Polydiallyldimethylammonium chloride and polyethyleneimine are also polymers with a function of promoting film formation of an electrolyte, and can effectively promote film formation of the electrolyte.

In some embodiments, the three-dimensional porous current collector 11 includes one or more of three-dimensional porous current collectors 11 made of stainless steel, molybdenum, titanium, nickel, copper, and carbon material. To be specific, the three-dimensional porous current collector 11 may be one or more of a stainless steel porous current collector, a molybdenum porous current collector, a titanium porous current collector, a nickel porous current collector, a copper porous current collector, and a carbon-material porous current collector.

In some embodiments, a pore diameter of the three-dimensional porous current collector 11 is 50-600 µm. It can be understood that the pore diameter of the three-dimensional porous current collector 11 refers to an average pore diameter. The pore diameter of the three-dimensional porous current collector 11 may be but is not limited to 50 µm, 100 µm, 150 µm, 200 µm, 250 µm, 300 µm, 350 µm, 400 µm, 450 µm, 500 µm, 550 µm, or 600 µm.

In some embodiments, a porosity of the three-dimensional porous current collector 11 is 50%-90%. It can be understood that the porosity of the three-dimensional porous current collector 11 may be but is not limited to 50%, 55%, 60%, 65%, 70%, 75%, 80%, 85%, or 90%.

A second aspect of this application provides a preparation method of the negative electrode plate 1 according to the first aspect of this application. The preparation method includes the following steps:
providing a three-dimensional porous current collector 11;
attaching an insulation slurry to a side surface of the three-dimensional porous current collector 11 and making the insulation slurry to permeate inside the three-dimensional porous current collector 11; where a permeating depth of the insulation slurry is less than a thickness of the three-dimensional porous current collector 11; and
drying the insulation slurry to form an insulation layer 12.

The insulation slurry is attached to a side surface of the three-dimensional porous current collector 11 and made to permeate inside the three-dimensional porous current collector 11. When the insulation slurry is dried, the insulation layer 12 is formed on the three-dimensional porous current collector 11, thereby obtaining the negative electrode plate 1 of this application that can improve the safety performance and cycling performance of the battery. This preparation method is simple to implement and suitable for industrial mass production.

In some embodiments, the insulation slurry includes a solvent and one or more of a polymer not conducting electrons or ions and a polymer conducting ions but not conducting electrons. It can be understood that the polymer is dispersed in the solvent to form the insulation slurry. Amounts of the solvent and polymer can be determined based on the actual situation, so that the polymer can be evenly and stably dispersed in the solvent and have appropriate viscosity for applying.

In some embodiments, the polymer not conducting electrons or ions includes one or more of polypropylene, polytetrafluoroethylene, and fluorinated ethylene propylene.

In some embodiments, the polymer conducting ions but not conducting electrons includes one or more of polyvinylidene fluoride, polyacrylonitrile, polyethylene oxide, polydiallyldimethylammonium chloride, and polyethyleneimine.

In some embodiments, the solvent includes one or more of N-methylpyrrolidone, tetrahydrofuran, dimethyl sulfoxide, toluene, ethylene carbonate, and propylene carbonate.

In some embodiments, a solid content of the insulation slurry is 1%-25%. It can be understood that the solid content of the insulation slurry may be but is not limited to 1%, 2%, 4%, 6%, 8%, 10%, 12%, 14%, 16%, 18%, 20%, 22%, 24%, or 25%.

Referring to FIG. 1, a third aspect of this application further provides a secondary battery including a positive electrode plate, a separator 2, a negative electrode plate 1, and an electrolyte, where the separator 2 is provided between the positive electrode plate and the negative electrode plate 1, the negative electrode plate 1 is the negative electrode plate 1 according to the first aspect of this application or the negative electrode plate 1 prepared using the preparation method according to the second aspect of this application, and the separator 2 is close to a side of the negative electrode plate 1 provided with the insulation layer 12. This can inhibit the growth of lithium dendrites on the side surface of the negative electrode plate 1 close to the separator 2, effectively improving the safety and cycling performance of the battery.

In some embodiments, the positive electrode plate is of a conventional electrode plate structure, and the positive electrode plate includes a positive electrode current collector 3 and a positive electrode active material layer 4 provided on the positive electrode current collector 3, where the positive electrode current collector 3 is provided on a side of the positive electrode active material layer 4 far away from the separator 2.

A fourth aspect of this application further provides an electric apparatus including the secondary battery according to the third aspect of this application.

The following describes the secondary battery and the electric apparatus of this application, with proper reference to accompanying drawings.

Unless otherwise specified, the components, material types, or contents mentioned for the battery are also applicable to lithium-ion secondary batteries and sodium-ion secondary batteries.

An embodiment of this application provides a secondary battery.

Usually, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is provided between the positive electrode plate and the negative electrode plate, mainly preventing short circuit of the positive and negative electrodes and allowing ions to pass through.

### [Positive electrode plate]

The positive electrode plate includes a positive electrode current collector and a positive electrode film layer provided on at least one surface of the positive electrode current collector.

For example, the positive electrode current collector includes two opposite surfaces in its thickness direction, and the positive electrode film layer is disposed on either or both of the two opposite surfaces of the positive electrode current collector.

In some embodiments, the positive electrode current collector may use metal foil. For example, the metal foil may be aluminum foil.

In some embodiments, the positive electrode active material may include a positive electrode active material well known in the art and used for batteries.

For example, the positive electrode active material of a lithium-ion secondary battery may include at least one of the following materials: olivine-structured lithium-containing phosphate, lithium transition metal oxide, and respective modified compounds thereof. This application is not limited to these materials, and other conventional materials that can be used as positive electrode active materials for batteries may also be used. One type of these positive electrode active materials may be used alone, or two or more types may be used in combination. Examples of the lithium transition metal oxide may include but are not limited to at least one of a lithium cobalt oxide (for example, LiCoO₂), a lithium nickel oxide (for example, LiNiO₂), a lithium manganese oxide (for example, LiMnO₂ and LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (NCM₃₃₃), LiNi_{0.5}Co_{0.2}Mn_{0.3}O₂, (NCM₅₂₃), LiNi_{0.5}Co_{0.25}Mn_{0.25}O₂ (NCM₂₁₁), LiNi_{0.6}CO_{0.2}Mn_{0.2}O₂ (NCM₆₂₂), LiNi_{0.8}Co_{0.1}Mn_{0.1}O₂ (NCM₈₁₁), a lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a lithium iron phosphate-carbon composite, lithium manganese phosphate (for example, LiMnPO₄), a lithium manganese phosphate-carbon composite, lithium iron manganese phosphate, and a lithium iron manganese phosphate-carbon composite.

For example, the positive electrode active material of a sodium-ion secondary battery may include at least one of the following materials: a sodium transition metal oxide, a polyanionic compound, and a Prussian blue compound. However, this application is not limited to these materials, and other conventional well-known materials that can be used as positive electrode active materials for sodium-ion batteries may also be used.

In an optional technical solution in this application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

In an optional technical solution in this application, the polyanionic compound may be a type of compounds containing sodium ions, transition metal ions, and tetrahedral (YO₄)ⁿ⁻anionic units. The transition metal may be at least one of Mn, Fe, Ni, Co, Cr, Cu, Ti, Zn, V, Zr, and Ce; Y may be at least one of P, S, and Si; and n denotes the valence state of (YO₄)ⁿ⁻.

The polyanionic compound may alternatively be a type of compounds having sodium ions, transition metal ions, tetrahedral (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si; n denotes the valence state of (YO₄)ⁿ⁻; and the halogen may be at least one of F, Cl, and Br.

The polyanionic compound may alternatively be a type of compounds having sodium ions, tetrahedral (YO₄)ⁿ⁻ anionic units, polyhedral units (ZO_{y})^{m+}, and selectable halogen anions. Y may be at least one of P, S, and Si; n denotes the valence state of (YO₄)ⁿ⁻; Z denotes a transition metal and may be at least one of Mn, Fe, Ni, Co, Cr, Cu, Ti, Zn, V, Zr, and Ce; m denotes the valence state of (ZO_{y})^{m+}; and the halogen may be at least one of F, Cl and Br.

The polyanionic compound is, for example, at least one of NaFePO₄, Na₃V₂(PO4)₃ (sodium vanadium phosphate, NVP for short), Na₄Fe₃(PO₄)₂(P₂O₇), NaM'PO4F (M' is one or more of V, Fe, Mn, and Ni), and Na₃(VO_{y})₂(PO₄)₂F_{3-2y} (0 ≤ y ≤ 1).

The Prussian blue compound may be a type of compounds having sodium ions, transition metal ions, and cyanogen ions (CN). The transition metal may be at least one of Mn, Fe, Ni, Co, Cr, Cu, Ti, Zn, V, Zr, and Ce. For example, the Prussian blue compound is NaₐMe_{b}Me'_{c}(CN)₆, where Me and Me' are each independently at least one of Ni, Cu, Fe, Mn, Co, and Zn, where 0 < a ≤ 2, 0 < b < 1, and 0 < c < 1.

A weight percentage of the positive electrode active material in the positive electrode film layer is 80-100wt% based on a total weight of the positive electrode film layer.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. A weight percentage of the binder in the positive electrode film layer is 0-20wt% based on the total weight of the positive electrode film layer.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber. A weight percentage of the conductive agent in the positive electrode film layer is 0-20wt% based on the total weight of the positive electrode film layer.

In some embodiments, the positive electrode plate can be prepared using the following method. The foregoing components for preparing the positive electrode plate, such as the positive electrode active material, conductive agent, binder, and any other components, are dispersed in a solvent (for example, N-methylpyrrolidone) to produce a positive electrode slurry, where a solid content of the positive electrode slurry is 40wt% (wt%) to 80wt% and a viscosity at room temperature is adjusted to 5000 mPa·s (mPa·s) to 25000 mPa·s. The positive electrode slurry is applied onto a surface of the positive electrode current collector, dried, and cold pressed by a cold press machine to form the positive electrode plate. A unit surface density of positive electrode powder coating is 150 milligram/square meter (mg/m²) to 350 mg/m², and a compacted density of the positive electrode plate is 3.0 gram/cubic centimeter (g/cm³) to 3.6 g/cm³, optionally 3.3-3.5 g/cm³.

The formula for calculating the compacted density is as follows: compacted density = surface density of coating/(thickness of electrode plate after pressing - thickness of current collector).

Mass M of the positive electrode active substance in a unit area of a positive electrode membrane can be obtained by weighing with a standard balance.

A thickness T of the positive electrode membrane can be measured using a micrometer, for example, using a micrometer Mitutoyo293-100 with an accuracy of 0.1 µm. It should be noted that the thickness of the positive electrode membrane mentioned in this application refers to a thickness of the positive electrode membrane in the positive electrode plate that is cold pressed for battery assembly.

### [Negative electrode plate]

The negative electrode plate adopts the negative electrode plate according to the first aspect of this application or the negative electrode plate prepared using the preparation method according to the second aspect of this application.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The electrolyte includes an electrolytic salt and a solvent.

In some embodiments, the electrolytic salt for a lithium-ion secondary battery may be one or more selected from a group consisting of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

The electrolytic salt for a sodium-ion secondary battery may be one or more selected from a group consisting of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

A concentration of the electrolytic salt is typically 0.5 moles/liter (mol/L)-5 mol/L.

In some embodiments, the solvent may be one or more selected from a group consisting of fluoroethylene carbonate (FEC), ethylidene carbonate (EC), propylidene carbonate (PC), ethyl methyl carbonate (EMC), diethyl carbonate (DEC), dimethyl carbonate (DMC), dipropyl carbonate (DPC), methylene propyl carbonate (MPC), ethylpropyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfonane (SF), methyl sulfonyl methane (MSM), ethyl methanesulfonane (EMS), or ethylsulfonyl ethane (ESE).

In some embodiments, the liquid electrolyte further optionally includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance or low-temperature performance of the battery.

### [Separator]

In some embodiments, the secondary battery further includes a separator. There is no particular limitation on the type of the separator in this application, and any well-known porous separator with good chemical stability and mechanical stability may be selected.

In some embodiments, a material of the separator may be selected from at least one of glass fiber, non-woven fabric, polyethylene, polypropylene, or polyvinylidene fluoride. The separator may be a single-layer film or a multi-layer composite film, which is not particularly limited. When the separator is a multi-layer composite film, the layers may be made of the same or different materials, which is not particularly limited.

In some embodiments, a thickness of the separator is 6-40 µm, optionally 12-20 µm.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, which, for example, may be polypropylene, polybutylene terephthalate, and polybutylene succinate.

This application has no particular limitation on a shape of the secondary battery, which may be cylindrical, prismatic, or of any other shapes. FIG. 2 shows a prismatic secondary battery 5 as an example.

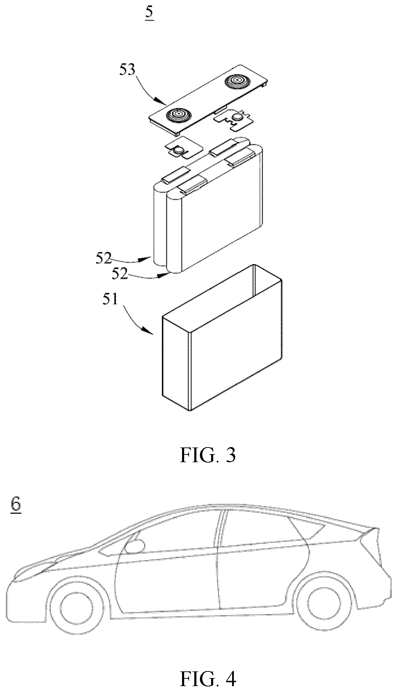

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be wound or laminated to form an electrode assembly 52. The electrode assembly 52 is packaged in the accommodating cavity. The electrolyte is infiltrated in the electrode assembly 52. The secondary battery 5 may include one or more electrode assemblies 52, which may be determined by persons skilled in the art based on actual needs.

In some embodiments, the secondary battery 5 may be assembled into a battery module, and the battery module may include one or more secondary batteries 5. A specific quantity may be determined by persons skilled in the art based on the application and capacity of the battery module.

In the battery module, a plurality of secondary batteries 5 may be sequentially arranged in a length direction of the battery module. Certainly, the plurality of secondary batteries 5 may be arranged in any other manner. Further, the plurality of secondary batteries 5 may be fastened using fasteners.

Optionally, the battery module may further include a housing with an accommodating space, and the plurality of secondary batteries 5 are accommodated in the accommodating space.

In some embodiments, the battery modules may be assembled into a battery pack, and the battery pack may include one or more battery modules. A specific quantity may be determined by persons skilled in the art based on the application and capacity of the battery pack.

The battery pack may include a battery box and a plurality of battery modules arranged in the battery box. The battery box includes an upper box body and a lower box body. The upper box body can cover the lower box body to form an enclosed space for accommodating the battery modules. The plurality of battery modules may be arranged in the battery box in any manner.

In addition, this application further provides an electric apparatus. The electric apparatus includes at least one of the secondary battery, the battery module, and the battery pack according to this application. The secondary battery, the battery module, or the battery pack may be used as a power source of the electric apparatus, or an energy storage unit of the electric apparatus. The electric apparatus may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

The secondary battery, the battery module, or the battery pack may be selected for the electric apparatus based on requirements for using the electric apparatus.

FIG. 4 shows an electric apparatus as an example. The electric apparatus is a battery electric vehicle, a hybrid electric vehicle, a plug-in hybrid electric vehicle, or the like. To meet requirements of the electric apparatus for a secondary battery with high power and high energy density, a battery pack or a battery module may be used.

In another example, the apparatus may be a mobile phone, a tablet computer, a notebook computer, or the like. The apparatus is usually required to be light and thin, and a secondary battery may be used as a power source.

The following are some examples.

To describe the technical problems solved by this application, technical solutions, and beneficial effects of this application more clearly, the following further describes this application in detail with reference to the examples and accompanying drawings. Apparently, the described examples are merely some but not all of the examples of this application. The following description of at least one exemplary example is merely illustrative and definitely is not construed as any limitation on this application or on use of this application. All other examples obtained by persons of ordinary skill in the art based on the examples of this application without creative efforts shall fall within the protection scope of this application.

Examples in which technologies or conditions are not specified are made in accordance with technologies or conditions described in literature in the field or made in accordance with product instructions. The reagents or instruments used are all conventional products that are commercially available if no manufacturer is indicated.

### I. Preparation examples

### Preparation example 1:

150 µm-thick copper foam produced by Shenzhen Yunfei New Materials Co., Ltd. was used as a three-dimensional porous current collector. A pore diameter of the copper foam was approximately 500 µm.

With polyvinylidene fluoride as a non-conductive polymer and N-methylpyrrolidone as a solvent, polyvinylidene fluoride was dissolved in N-methylpyrrolidone to produce an insulation slurry, where a solid content of the insulation slurry was 12%.

The insulation slurry was uniformly applied onto one side surface of the copper foam and made to permeate inside the copper foam and be attached to mesh wires of the copper foam.

A copper foam sample coated with the insulation slurry was dried in an oven at 80°C for 5 h to produce a three-dimensional porous current collector with an insulation layer on its surface, namely, the negative electrode plate of this application. A thickness of the insulation layer was 14 µm, and a thickness of the insulation layer attached to the mesh wire was 8 µm.

### Preparation example 2:

This preparation example was basically the same as Preparation example 1 except that a different type of polymer was used in the insulation slurry. In this preparation example, polytetrafluoroethylene was used as the non-conductive polymer.

### Preparation example 3:

This preparation example was basically the same as Preparation example 1 except that a different type of polymer was used in the insulation slurry. In this preparation example, polydiallyldimethylammonium chloride was used as the non-conductive polymer.

### Preparation example 4:

This preparation example was basically the same as Preparation example 1 except that the insulation layer on the three-dimensional porous current collector had a different thickness. In this preparation example, the thickness of the insulation layer on the three-dimensional porous current collector was 8 µm.

### Preparation example 5:

This preparation example was basically the same as Preparation example 1 except that the insulation layer on the three-dimensional porous current collector had a different thickness. In this preparation example, the thickness of the insulation layer on the three-dimensional porous current collector was 20 µm.

### Preparation example 6:

This preparation example was basically the same as Preparation example 1 except that the material of the three-dimensional porous current collector was different. In this preparation example, nickel foam was used as the three-dimensional porous current collector.

### Preparation example 7:

This preparation example was basically the same as Preparation example 1 except that the material of the three-dimensional porous current collector was different. In this preparation example, a carbon material was used as the three-dimensional porous current collector.

### Preparation example 8:

This preparation example was basically the same as Preparation example 1 except that the solid content of the insulation slurry was different. In this preparation example, the solid content of the insulation slurry was 9%.

### Preparation example 9:

This preparation example was basically the same as Preparation example 1 except that the solid content of the insulation slurry was different. In this preparation example, the solid content of the insulation slurry was 15%.

### II. Preparation comparative example

### Preparation comparative example 1:

In this preparation comparative example, blank copper foam was used as the three-dimensional porous current collector, and no insulation layer was provided on the three-dimensional porous current collector made of copper foam.

### III. Negative electrode plate performance test

### (1) Surface resistance test of negative electrode plate:

In the resistance mode of a multimeter, probes were used to measure the surface resistance of the insulation layer side of the negative electrode plates prepared in the foregoing preparation examples and surface resistance of the blank copper foam used in the preparation comparative example. Different positions were measured for three times, and an average value was recorded.

### (2) Negative electrode plate/Li-half battery performance test:

A button battery was used for discharge test. The negative electrode plates with a surface insulation layer prepared in the preparation examples were used as the negative electrode of the battery, a lithium sheet was used as the positive electrode, LiFSI solution dissolved in DME was used as the electrolyte, where a concentration of the electrolyte was 1 M, and a 12 µm-thick PE film was used as the separator.

Discharge conditions: the half battery was discharged at room temperatures at a constant current, where the current density was 1 mA/cm², until a short circuit signal is detected, that is, the battery voltage drops to 0 V.

The time spanning from the start of discharge to the short circuit was recorded.

### (3) LFP/negative electrode plate-full battery performance test:

A button battery was used for cycling test. Lithium iron phosphate (LFP) was used as the positive electrode active material of the battery, where a weight ratio of ferrous lithium phosphate, conductive carbon black, and PVDF binder in the positive electrode active material layer was 8: 1: 1, aluminum foil was used as the positive electrode current collector, the negative electrode plates prepared in the preparation examples were used as the negative electrode, LiFSI solution dissolved in DME was used as the electrolyte, where a concentration of the electrolyte was 1 M, and a 12 µm-thick PE film was used as the separator.

Charging conditions: the battery was charged in constant current-constant voltage mode (CC-CV mode) at room temperatures. The battery was charged in the constant current mode to a voltage of 3.65 V at a fixed rate of 0.2C and then charged in the constant voltage mode to a current of 0.05C, so that the battery was fully charged.

Discharge conditions: the battery was discharged in the constant current mode to 2 V at a discharge rate of 0.5C, and 200 cycles were performed.

The number of cycles was recorded when a discharge capacity retention rate was 50%.

Table 1 shows the performance test results of the negative electrode plates prepared in the preparation examples and the preparation comparative example.

**Table 1**

| | Three-dimensional porous current collector | Polymer | Surface resistance of current collector (kΩ) | (Negative electrode plate/Li) Time to short circuit of half battery (h) | (LFP/negative electrode plate) First cycle efficiency of full battery | (LFP/negative electrode plate) Average cycling CE of full battery | (LFP/negative electrode plate) Cycles at 50% capacity retention of full battery |
|---|---|---|---|---|---|---|---|
| Preparation example 1 | Copper foam | Polyvinylidene fluoride | 2.4-3 | 207 | 84.6% | 94.1% | 74 |
| Preparation example 2 | Copper foam | Polytetrafluoroethylene | 2.8-3.7 | 211 | 83.5% | 93.9% | 70 |
| Preparation example 3 | Copper foam | Polydiallyldimethylammonium chloride | 2.2-3.4 | 209 | 84.6% | 95.2% | 76 |
| Preparation example 4 | Copper foam | Polyvinylidene fluoride | 2.3-2.8 | 187 | 82.1% | 92.6% | 49 |
| Preparation example 5 | Copper foam | Polyvinylidene fluoride | 2.5-3.1 | 253 | 83.4% | 93% | 61 |
| Preparation example 6 | Nickel foam | Polyvinylidene fluoride | 2.5-2.8 | 214 | 83.9% | 94.5% | 80 |
| Preparation example 7 | Carbon material | Polyvinylidene fluoride | 2.2-3.1 | 203 | 84.6% | 93.6% | 67 |
| Preparation example 8 | Copper foam | Polyvinylidene fluoride | 1.6-1.9 | 157 | 83.3% | 91% | 44 |
| Preparation example 9 | Copper foam | Polyvinylidene fluoride | 3.5-4 | 270 | 81.3% | 91.7% | 51 |
| Preparation comparative example 1 | Blank copper foam | - | 0.0006-0.001 | 26 | 66.7% | 90.5% | 14 |

From the data of the foregoing preparation examples and preparation comparative example, it can be learned that when the three-dimensional porous current collector is provided with a surface insulation layer, the current collector surface resistance is dramatically increased compared with the blank copper foam sample. It indicates that the resistance against electrons reaching the surface of the current collector is increased, and electron passages on the surface of the current collector are effectively obstructed. This inhibits lithium ions from depositing on the surface of the negative electrode plate, suppressing short circuit of half batteries and improving the cycling performance of full batteries.

### IV. Application examples

Application example 1:
(1) Preparation of positive electrode plate
   A positive electrode active material lithium iron phosphate, a conductive carbon black, and a binder PVDF were dispersed in a solvent NMP at a weight ratio of 8:1:1 and mixed to uniformity to produce a positive electrode slurry. The positive electrode slurry was uniformly applied on a positive electrode current collector aluminum foil, followed by drying and cold pressing, to produce a positive electrode plate, where the coating amount per unit area was 0.4 g/1540.25 mm².
(2) Preparation of negative electrode plate
   The negative electrode plate prepared in Preparation example 1 of this application was used.
(3) Separator
   A PE film with a thickness of 12 µm was used as the separator.
(4) Preparation of electrolyte
   The electrolyte is LiFSI solution dissolved in DME, where a concentration of the electrolyte is 1 M.
(5) Preparation of battery
   The positive electrode plate, the separator, and the negative electrode plate were stacked in sequence, so that the separator was located between the positive and negative electrode plates for isolation and the separator was close to a side of the negative electrode plate provided with an insulation layer. The resulting stack was wounded to produce a prismatic bare cell. Then, the bare cell was placed in an aluminum plastic film and baked at 80°C to remove moisture, 10 g of non-aqueous electrolyte was injected, followed by processes such as sealing, standing, hot/cold pressing, formation, clamping, and capacity grading to obtain a finished battery.

The preparation methods of secondary batteries in Application examples 2 to 9 and Application comparative example 1 were similar to that in Application example 1 except that the negative electrode plates in corresponding preparation examples and preparation comparative example were used.

It should be noted that this application is not limited to the foregoing embodiments. The foregoing embodiments are merely used as examples, and embodiments with a substantially identical technical concept and same functions within the scope of the technical solution in this application all fall into the technical scope of this application. In addition, other manners formed by applying various modifications that can be figured out by persons skilled in the art to the embodiments and by combining some elements of the embodiments without departing from the essence of this application also fall into the scope of this application.

## Claims

1. A negative electrode plate, comprising a three-dimensional porous current collector and an insulation layer attached to a side of the three-dimensional porous current collector, wherein the insulation layer extends from a surface to an interior of the three-dimensional porous current collector through a porous structure, and a thickness of the insulation layer is less than a thickness of the three-dimensional porous current collector.

2. The negative electrode plate according to claim 1, **characterized in that** the thickness of the insulation layer is 5-20 µm, and the thickness of the three-dimensional porous current collector is 50-500 µm.

3. The negative electrode plate according to claim 1 or 2, **characterized in that** the insulation layer has a through hole.

4. The negative electrode plate according to any one of claims 1 to 3, **characterized in that** the insulation layer comprises a polymer attached to a mesh wire of the three-dimensional porous current collector.

5. The negative electrode plate according to claim 4, **characterized in that** a thickness of the polymer attached to the mesh wire is less than 10 µm.

6. The negative electrode plate according to claim 4 or 5, **characterized in that** the polymer comprises one or more of a polymer not conducting electrons or ions and a polymer conducting ions but not conducting electrons.

7. The negative electrode plate according to claim 6, **characterized in that** the polymer not conducting electrons or ions comprises one or more of polypropylene, polytetrafluoroethylene, and fluorinated ethylene propylene.

8. The negative electrode plate according to claim 6 or 7, **characterized in that** the polymer conducting ions but not conducting electrons comprises one or more of polyvinylidene fluoride, polyacrylonitrile, polyethylene oxide, polydiallyldimethylammonium chloride, and polyethyleneimine.

9. The negative electrode plate according to any one of claims 1 to 8, **characterized in that** the three-dimensional porous current collector comprises one or more of three-dimensional porous current collectors made of stainless steel, molybdenum, titanium, nickel, copper, and carbon material.

10. The negative electrode plate according to any one of claims 1 to 9, **characterized in that** the negative electrode plate satisfies at least one of the following (1) and (2):
(1) a pore diameter of the three-dimensional porous current collector is 50-600 µm; and
(2) a porosity of the three-dimensional porous current collector is 50%-90%.

11. A preparation method of negative electrode plate, **characterized by** comprising the following steps:
providing a three-dimensional porous current collector;
attaching an insulation slurry to a side surface of the three-dimensional porous current collector and making the insulation slurry to permeate inside the three-dimensional porous current collector; wherein a permeating depth of the insulation slurry is less than a thickness of the three-dimensional porous current collector; and
drying the insulation slurry to form an insulation layer.

12. The preparation method of negative electrode plate according to claim 11, **characterized in that** the insulation slurry comprises a solvent and one or more of a polymer not conducting electrons or ions and a polymer conducting ions but not conducting electrons.

13. The preparation method of negative electrode plate according to claim 12, **characterized in that** the preparation method satisfies at least one of the following (3) and (4):
(3) the polymer not conducting electrons or ions comprises one or more of polypropylene, polytetrafluoroethylene, and fluorinated ethylene propylene; and
(4) the polymer conducting ions but not conducting electrons comprises one or more of polyvinylidene fluoride, polyacrylonitrile, polyethylene oxide, polydiallyldimethylammonium chloride, and polyethyleneimine.

14. The preparation method of negative electrode plate according to claim 12 or 13, **characterized in that** the solvent comprises one or more of N-methylpyrrolidone, tetrahydrofuran, dimethyl sulfoxide, toluene, ethylene carbonate, and propylene carbonate.

15. The preparation method of negative electrode plate according to any one of claims 11 to 14, **characterized in that** a solid content of the insulation slurry is 1%-25%; and
optionally, the solid content of the insulation slurry is 9%-15%.

16. A secondary battery, **characterized by** comprising a positive electrode plate, a separator, a negative electrode plate, and an electrolyte, wherein the separator is provided between the positive electrode plate and the negative electrode plate, the negative electrode plate is the negative electrode plate according to any one of claims 1 to 10 or a negative electrode plate prepared using the preparation method according to any one of claims 11 to 15, and the separator is close to a side of the negative electrode plate provided with an insulation layer.

17. An electric apparatus, **characterized by** comprising the secondary battery according to claim 16.
